# EUROPEAN PATENT SPECIFICATION

(11) **EP 1 686 296 B1**
(45) Date of publication and mention of the grant of the patent: **26.03.2008**
(21) Application number: 05019397.8
(22) Date of filing: 07.09.2005
(51) Int. Cl.: F16J 15/16, F16J 15/32

(54) **Lip seal and manufacturing method thereof**
Lippendichtring und Verfahren zu seiner Herstellung
Joint à lèvre et son procédé de fabrication

(30) Priority: 28.01.2005 JP 2005020797
(43) Date of publication of application: 02.08.2006
(73) Proprietor: Carl Freudenberg KG, 69469 Weinheim (DE)
(72) Inventor: Anzai, Masahiro, Fukushima-shi Fukushima 960-1193 (JP)

(56) References cited:
- EP-A- 1 043 525
- DE-A1- 19 934 453
- US-A- 6 029 980
- US-A1- 2004 169 339
- PATENT ABSTRACTS OF JAPAN vol. 2000, no. 11, 3 January 2001 (2001-01-03) -& JP 2000 230643 A (HITACHI CONSTR MACH CO LTD; NIPPON VALQUA IND LTD), 22 August 2000 (2000-08-22)
- PATENT ABSTRACTS OF JAPAN vol. 1996, no. 02, 29 February 1996 (1996-02-29) -& JP 07 269713 A (KIIPAA KK), 20 October 1995 (1995-10-20)

## Description

### BACKGROUND OF THE INVENTION

### Field of the Invention

The present invention relates to a lip seal corresponding to one kind of sealing apparatuses and a manufacturing method thereof, and more particularly, to a lip seal in which a backup ring backing up a seal lip is assembled with respect to a lip seal main body obtained by integrally forming a seal lip made of a rubber-like elastic material with a metal ring, and a manufacturing method thereof. The lip seal in accordance with the present invention is used, for example, as a power steering seal in a vehicle such as a motor vehicle or the like.

### Description of the Related Art

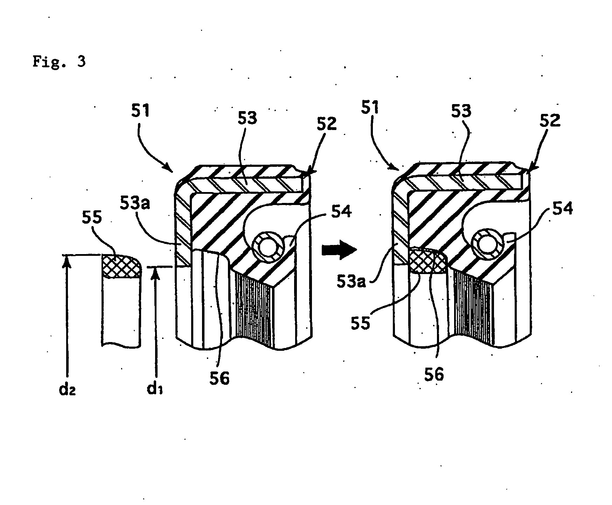

In conventional, as shown in Fig. 3, there has been known a lip seal 51 which has a lip seal main body 52 structured by integrally forming a seal lip 54 made of a rubber-like elastic material with a metal ring 53, and is structured by assembling a backup ring 55 backing up the seal lip 54 in a back surface side (a left side in the drawing) of the seal lip 54 in the seal lip main body 52.

However, in this conventional art, since the structure is made such that an inward flange portion 53a provided as a part of the metal ring 53 in the metal ring 53 holds the backup ring 55 in an inner peripheral end portion of the inward flange portion 53a in a come-off preventing manner, it is necessary to set an inner diameter (a hollow diameter) d1 of the inward flange portion 53a smaller than an outer diameter d2 of the backup ring 55 so as to be close to a shaft diameter to the utmost. Accordingly, there is a disadvantage that it is hard to assemble the backup ring 55 with respect to an attaching groove 56 between the seal lip 54 and the inward flange portion 53a from one side in an axial direction because of the above reason.

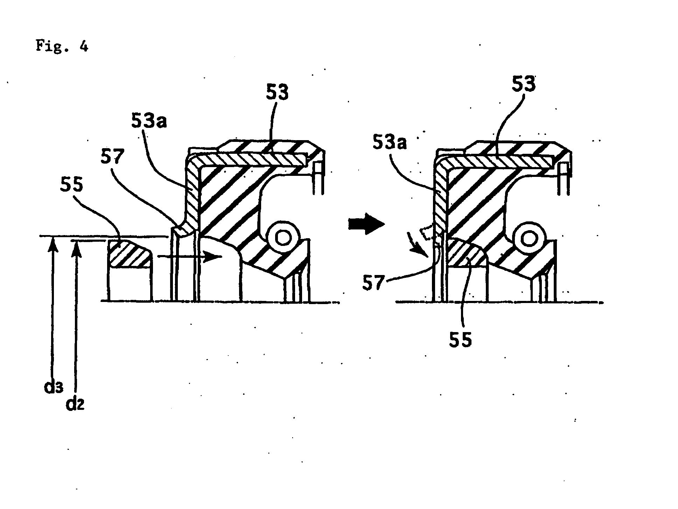

In order to solve the disadvantage mentioned above, the applicant of the present invention has previously proposed a manufacturing method of a lip seal structured such as to form a stopper 57 having an inner diameter d3 larger than an outer diameter d2 of the backup ring 55 and protruding in an axial direction in an inner peripheral end portion of the inward flange portion 53a of the metal ring 53, insert the backup ring 55 through an inner periphery of the stopper 57 and thereafter fold the stopper 57 to an inner peripheral side until a position where a diameter of an inner peripheral portion of the stopper 57 is smaller than the outer diameter d2 of the backup ring 55, as shown in Fig. 4. In accordance with this method, since the backup ring 55 can smoothly pass through the inner peripheral side of the inward flange portion 53a at a time of assembling, it is possible to intend to make an assembling work easy (refer to Japanese Unexamined Patent Publication No. 4-362376).

However, in this prior art, it is necessary to execute a metal working of folding the stopper 57 provided in the metal ring 53, in an assembling step of the backup ring 55 as mentioned above.

The document US 2004/0169339 A1 shows a lip seal with a backup ring backing up a seal lip. A backup ring assembly portion is provided in a back surface side of the seal lip in the seal lip main body.

The document JP 2000 230643 A describes a lip seal as shown above whereby the back ring is fixed by a backup ring holding member which has a taper-shaped engagement portion.

### SUMMARY OF THE INVENTION

The present invention is made by taking the points mentioned above into consideration, and an object of the present invention is to provide a lip seal in which it is not necessary to execute a metal working of folding a metal ring in an assembling step of a backup ring and the backup ring can be easily assembled, and a manufacturing method thereof.

In order to achieve the object mentioned above, in accordance with a first aspect of the present invention, there is provided a lip seal structured by assembling a backup ring backing up a seal lip made of a rubber-like elastic material with respect to a lip seal main body obtained by integrally forming the seal lip with a metal ring, whereby the lip seal comprises:
a backup ring assembly portion provided in a back surface side of the seal lip in the lip seal main body;
a backup ring holding member assembly portion provided further in a back surface side of the backup ring assembly portion, and having a larger diameter than a diameter of the backup ring assembly portion;
a backup ring assembled in the backup ring assembly portion; and
a backup ring holding member assembled in the backup ring holding member assembly portion, and having a smaller inner diameter than an outer diameter of the backup ring, characterised in that a taper-shaped engagement portion is provided in the outer peripheral surface of the backup ring holding member, and the taper-shaped engagement portion is engaged with an undercut-shaped come-off preventing engagement portion formed in the taper shape and provided in the backup ring holding member assembly portion, whereby the structure is made such that the backup ring holding member is fitted to the rubber-like elastic material of the lip seal main body (2),

There is provided a manufacturing method, which is not claimed, of a lip seal structured by assembling a backup ring backing up a seal lip made of a rubber-like elastic material with respect to a lip seal main body obtained by integrally forming the seal lip with a metal ring, characterized in that the method comprises:
a step of manufacturing the lip seal main body, forming a backup ring assembly portion in a back surface side of the seal lip at this time, and forming a backup ring holding member assembly portion having a larger diameter than a diameter of the backup ring assembly portion in a back surface side thereof;
a step of assembling a backup ring in the backup ring assembly portion; and
a step of assembling a backup ring holding member having a smaller inner diameter than an outer diameter of the backup ring in the backup ring holding member assembly portion. As a procedure, the lip seal main body is manufactured, the backup ring is next assembled, and the backup ring holding member is thereafter assembled.

In the lip seal in accordance with the present invention provided with the structure mentioned above, since each of the backup ring backing up the seal lip, and the backup ring holding member holding the backup ring is formed as an independent part with respect to the lip seal main body structured by integrally forming the seal lip with the metal ring, the assembly of the backup ring is executed in a state in which any member disturbing the assembly (the backup ring holding member) does not exist, by employing the procedure of first assembling the backup ring and thereafter assembling the backup ring holding member. Further, since the backup ring holding member is fixed to the lip seal main body in accordance with a means such as the fitting or the like, it is possible to assemble the backup ring without executing the metal working of folding the metal ring.

Further, in the manufacturing method of the lip seal provided with the structure mentioned above, since the procedure is constituted by assembling the backup ring holding member after assembling the backup ring, the assembly of the backup ring is executed in a state in which any member disturbing the assembly (the backup ring holding member) does not exist. Further, since the backup ring holding member is fixed to the lip seal main body in accordance with the means such as the fitting or the like, it is possible to assemble the backup ring without executing the metal working of folding the metal ring.

The present invention achieves the following effects.

In other words, in the lip seal in accordance with the present invention, as described above, since each of the backup ring backing up the seal lip, and the backup ring holding member holding the backup ring is formed as an independent part with respect to the lip seal main body structured by integrally forming the seal lip with the metal ring, the assembly of the backup ring is executed in a state in which any member disturbing the assembly (the backup ring holding member) does not exist, by employing the procedure of assembling the backup ring and thereafter assembling the backup ring holding member. Since the backup ring holding member assembly portion provided in the lip seal main body has the larger diameter than the diameter of the backup ring assembly portion provided in the lip seal main body in the same manner, the backup ring holding member assembly portion does not obstruct the assembly of the backup ring. Accordingly, it is possible to easily assemble the backup ring with respect to the lip seal main body. Further, since the backup ring holding member is fixed to the lip seal main body in accordance with claim 1 , it is possible to assemble the backup ring with respect to the lip seal main body without executing the metal working of folding the metal ring.

Further, in the manufacturing method of the lip seal , as described above but not claimed, since the procedure is constituted by assembling the backup ring holding member after assembling the backup ring, the assembly of the backup ring is executed in a state in which any member disturbing the assembly (the backup ring holding member) does not exist. Since the backup ring holding member assembly portion provided in the lip seal main body has the larger diameter than the diameter of the backup ring assembly portion provided in the lip seal main body in the same manner, the backup ring holding member assembly portion does not obstruct the assembly of the backup ring. Accordingly, it is possible to easily assemble the backup ring with respect to the lip seal main body. Further, since the backup ring holding member is fixed to the lip seal main body in accordance with the means of claim 1., it is possible to assemble the backup ring with respect to the lip seal main body without executing the metal working of folding the metal ring.

### BRIEF DESCRIPTION OF THE DRAWINGS

Fig. 1 is a cross sectional view of a main portion showing a manufacturing process and a finished state of a lip seal in accordance with an embodiment of the present invention;
Fig. 2 is a cross sectional view of a main portion showing an installed state of the lip seal;
Fig. 3 is a cross sectional view of a main portion showing a manufacturing process and a finished state of a lip seal in accordance with a conventional embodiment; and
Fig. 4 is a cross sectional view of a main portion showing a manufacturing process and a finished state of a lip seal in accordance with the other conventional embodiment.

### DESCRIPTION OF THE PREFERRED EMBODIMENT

In this case, the following embodiment is included in the present invention.

In order to achieve the object mentioned above, a metal ring of a seal is not integrally formed, but is separately formed in a seal outer peripheral side (a fitting side) and a backup ring holding side. A seal bottom surface portion is provided with a groove to which a backup ring holding metal ring end portion (an outer diameter portion) is fitted, and the structure is made such that the metal ring is fitted to the groove so as to be assembled after assembling the backup ring in the seal. A groove shape of the bottom surface portion is constituted by a taper shape, and is intended to prevent the metal ring from falling away after being fitted.

In accordance with the structure mentioned above, it is easy to assemble the backup ring by attaching the metal ring for holding the backup ring after assembling the backup ring.

### Embodiment

Next, a description will be given of an embodiment in accordance with the present invention with reference to the accompanying drawings.

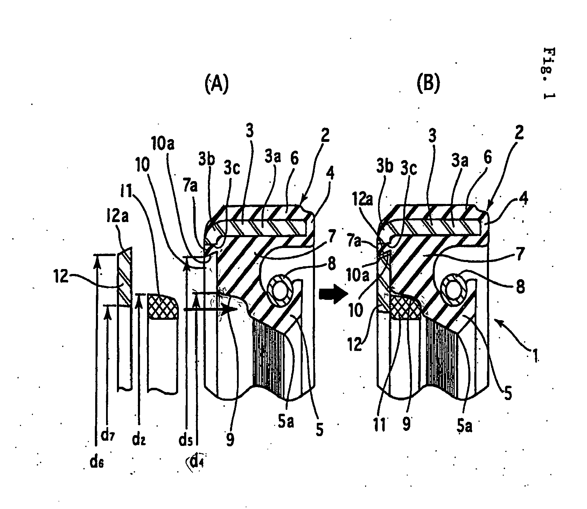

Fig. 1 shows a lip seal 1 in accordance with the embodiment of the present invention. Further, in more detail, Fig. 1A shows a manufacturing process of the lip seal 1, and Fig. 1B shows a finished state of the lip seal 1. The lip seal 1 in accordance with the embodiment is in particular used as a power steering seal, and is structured as follows.

In other words, first, as shown in Fig. 1B, a seal lip 5 made of a rubber-like elastic material is integrally formed in a metal ring 3, whereby a lip seal main body 2 is formed. A backup ring 11 is assembled in a back surface side (a left side in the drawing) of the seal lip 5, and a backup ring holding member 12 is assembled in the lip seal main body 2 further in a back surface side of the backup ring 11.

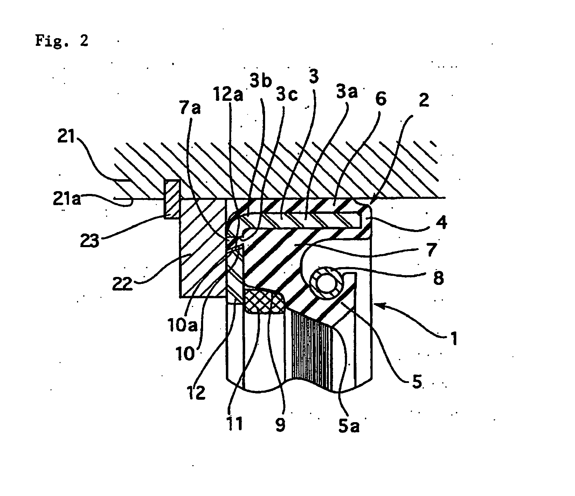

The seal lip 5 is formed as a part of a rubber-like elastic material 4 bonded in a vulcanizing manner to the metal ring 3, and the rubber-like elastic material 4 is provided with an outer peripheral rubber portion 6 attached to an outer peripheral surface of the metal ring 3 and brought into close contact with an inner surface of a housing 21 (refer to Fig. 2) at a time of being attached, and an inner peripheral rubber portion 7 attached to an inner peripheral surface of the metal ring 3 and integrally holding the seal lip 5, in addition to the seal lip 5. Further, the seal lip 5 has a lip end 5a slidably brought into close contact with a peripheral surface of the shaft (not shown), and a garter spring 8 for regulating a fastening margin with respect to the shaft is fitted and attached to an outer peripheral side thereof.

In a back surface side of the seal lip 5, a step-shaped backup ring assembly portion 9 for assembling the backup ring 11 is provided in an inner peripheral surface of the inner peripheral rubber portion 7, and a step-shaped backup ring holding member assembly portion 10 having a larger diameter d5 than a diameter d4 of the backup ring assembly portion 9 is provided further in a back surface side thereof and in an end surface portion of the inner peripheral rubber portion 7.

The metal ring 3 is structured by folding one end of a tubular portion 3a in a circular arc cross sectional shape toward an inner side in a diametrical direction, and a folded portion 3b is arranged in an outer peripheral side of the step-shaped backup ring holding member assembly portion 10. Further, the folded portion 3b is formed in such a manner that the inner peripheral surface after being folded forms a cylindrical surface, a partial rubber 7a of the inner peripheral rubber portion 7 is attached to the cylindrical surface, and the partial rubber 7a forms an outer peripheral wall of the backup ring holding member assembly portion 10. Further, an outer peripheral wall thereof is provided with an undercut-shaped come-off preventing engagement portion 10a forming a taper shape for preventing the backup ring holding member 12 from coming off in an axial direction.

The backup ring 11 is formed by a predetermined resin, is assembled in the backup ring assembly portion 9 and backs up the seal lip 5 from a back surface side. In this case, a cut portion such as a bias cut or the like may be provided in the backup ring 11 at one position on a circumference thereof.

The backup ring holding member 12 is formed in an annular plate shape by the same metal as the metal ring 3, and has an outer diameter d6 fitted to the backup ring holding member assembly portion 10 and an inner diameter d7 smaller than the outer diameter d2 of the backup ring 11. Further, an outer peripheral surface thereof is provided with a taper-shaped engagement portion 12a forming a shape corresponding to the come-off preventing engagement portion 10a and improving an engaging force. In this case, the material of the backup ring holding member 12 may be constituted by a hard resin or the like in addition to the metal.

The lip seal 1 having the structure mentioned above is attached to an inner periphery of an axial hole 21a of the housing 21, as shown in Fig. 2, and is slidably brought into close contact with a peripheral surface of a shaft (not shown) in the lip end 5a of the seal lip 5 so as to achieve a sealing effect. At a time of attaching to the housing 21, a backup plate 22 is placed in a back surface side of the lip seal 1, and the backup plate 22 holds the lip seal 1. The backup plate 22 is positioned by a snap ring 23.

Next, a description will be given of a manufacturing method of the lip seal 1 having the structure mentioned above.

In other words, first, as shown in Fig. 1A, the rubber-shaped elastic material 4 is bonded in a vulcanizing manner to the metal ring 3, the rubber portion provided with the outer peripheral rubber portion 6, the inner peripheral rubber portion 7, the seal lip 5 and the like is integrally formed, the step-shaped backup ring assembly portion 9 is formed in the back surface side of the seal lip 5 and in the inner peripheral surface of the inner peripheral rubber portion 7, at this time, and the backup ring holding member assembly portion 10 showing the same step shape is formed further in the back surface side thereof and in the end surface portion of the inner peripheral rubber portion 7. Next, the backup ring 11 is assembled in the backup ring assembly portion 9, and the backup ring holding member 12 is next assembled in the backup ring holding member assembly portion 10, whereby the backup seal 1 is finished as shown in Fig. 1B.

After the assembly, in the backup ring 11 assembled in the backup ring assembly portion 9, the outer diameter d2 is set larger than the inner diameter d7 of the backup ring holding member 12, the backup ring 11 does not fall away. Further, since the backup ring holding member 12 is fitted to the backup ring holding member assembly portion 10, the backup ring holding member 12 does not fall away. Further, since the taper-shaped engagement portion 12a is provided in the outer peripheral surface of the backup ring holding member 12, and the taper-shaped engagement portion 12a is engaged with the undercut-shaped come-off preventing engagement portion 10a formed in the taper shape and provided in the backup ring holding member assembly portion 10, the come-off preventing force is increased. Accordingly, from this point, the backup ring holding member 12 does not fall away.

In the lip seal 1 provided with the structure mentioned above and the manufacturing method thereof, since the backup ring holding member 12 is assembled in the backup ring holding member assembly portion 10 after the backup ring 11 is first assembled in the backup ring assembly portion 9 of the lip seal main body 2 as mentioned above, the assembly of the backup ring 11 is executed in a state in which any member disturbing the assembly (the backup ring holding member 12) does not exist in view of a dimensional relation. Since the backup ring holding member assembly portion 10 provided in the lip seal main body 2 is provided with the diameter d5 larger than the diameter d4 of the backup ring assembly portion 9 provided in the lip seal main body 2 in the same manner, the backup ring holding member assembly portion 10 does not obstruct the assembly of the backup ring 11. Accordingly, it is possible to easily assemble the backup ring 11 with respect to the lip seal main body 2.

Further, since the backup ring holding member 12 is fixed to the lip seal main body 2 in accordance with the means such as the fitting or the like, it is possible to assemble the backup ring 11 with respect to the lip seal main body 2 without executing the metal working of folding the metal ring 3.

Accordingly, as mentioned above, in accordance with the primary object, it is possible to provide the lip seal 1 in which it is not necessary to execute the metal working of folding the metal ring 3 in the assembling step of the backup ring 11, and it is possible to easily assemble the backup ring 11, and the manufacturing method thereof.

In this case, in the embodiment mentioned above, the structure can be variously modified within the scope capable of achieving the object of the present invention, as defined by claim 1. In the embodiment mentioned above, the structure is made such that the backup ring holding member 12 is fitted to the rubber by arranging the partial rubber 7a around the backup ring holding member assembly portion 10. However, in another embodiment, not falling within the scope of the claim, the structure may be made such that the backup ring holding member 12 is fitted to the metal by exposing a part of the metal ring 3 to the backup ring holding member assembly portion 10, in place thereof.

## Claims

1. A lip seal (1) structured by assembling a backup ring (11) backing up a seal lip (5) made of a rubber-like elastic material with respect to a lip seal main body (2) obtained by integrally forming said seal lip (5) with a metal ring (3), a backup ring assembly portion (9) provided in a back surface side of the seal lip (5) in said lip seal main body (2); a backup ring holding member assembly portion (10) provided further in a back surface side of said backup ring assembly portion (9), and having a larger diameter (d₅) than a diameter (d₄) of said backup ring assembly portion (9); a backup ring (11) assembled in said backup ring assembly portion (9); and a backup ring holding member (12) assembled in said backup ring holding member assembly portion (10), and having a smaller inner diameter (d₇) than an outer diameter (d₂) of said backup ring (11), **characterized in that** a taper-shaped engagement portion (12a) is provided in the outer peripheral surface of the backup ring holding member (12), and the taper-shaped engagement portion (12a) is engaged with an undercut-shaped come-off preventing engagement portion (10a) formed in the taper shape and provided in the backup ring holding member assembly portion (10), whereby the structure is made such that the backup ring holding member (12) is fitted to the rubber-like elastic material of the lip seal main body (2).

## Patentansprüche

1. Lippendichtung (1), die durch Montieren eines eine aus einem gummiartigen elastischen Material hergestellte Dichtlippe (5) stützenden Stützrings (11) bezüglich eines Lippendichtungshauptkörpers (2), welcher durch integrales Formen der Dichtlippe (5) mit einem Metallring (3) erhalten wird, gebildet wird, mit einem in einer Rückseite der Dichtlippe (5) in dem Lippendichtungshauptkörper (2) vorgesehenen Stützringanordnungsteil (9), einem weiter in einer Rückseite des Stützringanordnungsteils (9) vorgesehenen Stützringhaltegliedanordnungsteil (10), der einen größeren Durchmesser (d₅) als ein Durchmesser (d₄) des Stützringanordnungsteils (9) aufweist, einem im Stützringanordnungsteil (9) angeordneten Stützring (11) und einem im Stützringhaltegliedanordnungsteil (10) angeordneten Stützringhalteglied (12), das einen kleineren Innendurchmesser (d₇) als ein Außendurchmesser (d₂) des Stützrings (11) aufweist, **dadurch gekennzeichnet, dass** ein sich verjüngend geformter Eingriffsteil (12a) in der Außenumfangsfläche des Stützringhalteglieds (12) vorgesehen ist und der sich verjüngend geformte Eingriffsteil (12a) mit einem hinterschnittenen, ein Lösen verhindernden Eingriffsteil (10a) in Eingriff steht, der in der sich verjüngenden Form ausgebildet und im Stützringhaltegliedanordnungsteil (10) vorgesehen ist, wobei die Struktur so hergestellt ist, dass das Stützringhalteglied (12) an dem gummiartigen elastischen Material des Lippendichtungshauptkörpers (2) angebracht ist.

## Revendications

1. Joint (1) à lèvre structuré par le montage d'une bague (11) de soutien soutenant une lèvre (5) de joint constituée d'un matériau élastique caoutchouteux par rapport à un corps principal (2) de joint à lèvre obtenu en formant ladite lèvre (5) de joint de façon intégrée avec un anneau métallique (3), comprenant une partie (9) de montage de bague de soutien ménagée dans un côté surface arrière de la lèvre (5) de joint dans ledit corps principal (2) de joint à lèvre ; une partie (10) de montage d'élément de maintien de bague de soutien ménagée en outre dans un côté surface arrière de ladite partie (9) de montage de bague de soutien et présentant un diamètre (d₅) supérieur à un diamètre (d₄) de ladite partie (9) de montage de bague de soutien ; une bague (11) de soutien montée dans ladite partie (9) de montage de bague de soutien ; et un élément (12) de maintien de bague de soutien monté dans ladite partie (10) de montage d'élément de maintien de bague de soutien et présentant un diamètre intérieur (d₇) inférieur à un diamètre extérieur (d₂) de ladite bague (11) de soutien, **caractérisé en ce qu'**une partie (12a) d'emboîtement de forme conique est aménagée dans la surface périphérique extérieure de l'élément (12) de maintien de bague de soutien, et **en ce que** la partie (12a) d'emboîtement de forme conique est emboîtée dans une partie (10a) d'emboîtement en contre-dépouille empêchant le déboîtement, formée en cône et ménagée dans la partie (10) de montage d'élément de maintien de bague de soutien, la structure étant ainsi constituée de telle sorte que l'élément (12) de maintien de bague de soutien soit ajusté au matériau élastique caoutchouteux du corps principal (2) de joint à lèvre.
